(19) Europäisches Patentamt

European Patent Office

Office européen des brevets

(11) Veröffentlichungsnummer: **0 335 388**
**A2**

(12) **EUROPÄISCHE PATENTANMELDUNG**

(21) Anmeldenummer: 89105613.7

(51) Int. Cl.⁴: **B29C 45/73**

(22) Anmeldetag: 30.03.89

(30) Priorität: 31.03.88 DE 3811112

(43) Veröffentlichungstag der Anmeldung:
04.10.89 Patentblatt 89/40

(84) Benannte Vertragsstaaten:
CH DE FR GB IT LI NL SE

(71) Anmelder: **Müller, Fritz**
**Neuer Wasen 6**
**D-7118 Ingelfingen-Criesbach(DE)**

(72) Erfinder: **Müller, Fritz**
**Neuer Wasen 6**
**D-7118 Ingelfingen-Criesbach(DE)**

(74) Vertreter: **Leyh, Hans, Dr.-Ing. et al**
**Patentanwälte Berendt, Leyh & Hering Innere**
**Wiener Strasse 20**
**D-8000 München 80(DE)**

(54) Spritzgussverfahren für Kunststoffe und Spritzgussform.

(57) Einerseits wird ein Spritzgußverfahren für Kunststoffe angegeben, bei dem die Spritzgußform vor dem Einspritzen des Materials auf eine über dem Schmelzpunkt des Materials liegende Temperatur mit Hilfe eines Wärmeträgers, vorzugsweise eines flüssigen Wärmeträgers, erwärmt wird, der Wärmeträgerdurchfluß durch die Spritzgußform während des Einspritzens gesperrt wird, um die den Formhohlraum der Spritzgußform begrenzenden dünnwandig ausgeführten Teile zusätzlich zu stützen, bei dem nach dem vollständigen Ausfüllen des Formhohlraums der Spritzgußform mit Material die Spritzgußform unter Durchfluß des Wärmeträgers auf eine unter dem Gefrierpunkt des Materials liegende Temperatur gekühlt wird. Die Kühlung kann so gesteuert werden, daß sich ein mit der Abkühlung ergebender Materialschwund wirksam ausgleichen läßt. Andererseits wird eine Spritzgußform beschrieben, bei der der Formhohlraum von dünnwandigen Teilen begrenzt wird, und die Durchflußkanäle für den Wärmeträger auf der vom Formhohlraum abgewandten Seite der dünnwandigen Teile verlaufen. Zweckmäßigerweise sind zwei Wärmeträgerkreisläufe, ein innerer Wärmeträgerkreislauf und ein äußerer Wärmeträgerkreislauf vorgesehen, die gesondert steuerbar sind, um bei der Abkühlung angußfern zu beginnen und dann die Abkühlung allmählich bis zur Eingußbüchse der Spritzgußformen in gesteuerter Weise weiterzuführen.

## Spritzgußverfahren für Kunststoffe und Spritzgußform

Die Erfindung bezieht sich allgemein auf ein Spritzgußverfahren für Kunststoffe, bei dem eine einen Formhohlraum begrenzende Spritzgußform mit einem durch die Spritzgußform strömenden Wärmeträger erwärmt oder gekühlt wird. Ferner befaßt sich die Erfindung auch mit einer Spritzgußform mit einem Formkern, Durchflußkanälen für einen Wärmeträger zur Erwärmung oder Kühlung der Form und mit einem Formhohlraum.

Die Erfindung zielt daher darauf ab, ein Spritzgußverfahren für Kunststoffe bereitzustellen, bei dem sich auch hochempfindliche Kunststoffe mit kritischem Fließverhalten maßgenau auf wirtschaftliche Weise herstellen lassen, sowie sich auch solche Teile herstellen lassen, die eine dünne Wandstärke besitzen und für die lange Fließwege in der Spritzgußform benötigt werden. Ferner bezweckt die Erfindung eine hierfür geeignete Spritzgußform bereitzustellen.

Nach der Erfindung zeichnet sich ein Spritzgußverfahren für Kunststoffe, bei dem eine einen Formhohlraum begrenzende Spritzgußform mit einem durch die Spritzgußform strömenden Wärmeträger erwärmt oder gekühlt wird, dadurch aus, daß die Spritzgußform vor dem Einspritzen des Materials auf eine über dem Schmelzpunkt des Materials liegende Temperatur durch den Wärmeträger erwärmt wird, der Wärmeträgerdurchfluß durch die Spritzgußform während des Einspritzens gesperrt wird, und daß nach dem vollständigen Ausfüllen des Formhohlraums mit Material die Spritzgußform unter Durchfluß des Wärmeträgers auf eine unter dem Gefrierpunkt des Materials liegende Temperatur gekühlt wird.

Wesentlich beim erfindungsgemäßen Verfahren ist die Tatsache, daß wenigstens die mit dem zu verarbeitenden Material in Berührung kommenden Teile, die den Formhohlraum der Spritzgußform begrenzen, auf eine über dem Schmelzpunkt des Materials liegende Temperatur erwärmt werden, so daß beim Einspritzen des Materials zuverlässig gewährleistet wird, daß der gesamte Formhohlraum bis an die entfernt liegendsten Enden selbst dann zuverlässig ausgefüllt wird, wenn lange Fließwege vorhanden sind, da das Material im Formhohlraum durch die Erwärmung auf eine Temperatur über dem Schmelzpunkt des Materials wirksam in fließfähigem Zustand gehalten wird. Da beim erfindungsgemäßen Verfahren der Wärmeträgerdurchfluß durch die Spritzgußform während des Einspritzens des Materials gesperrt wird, werden die den Formhohlraum begrenzenden Wände in der Spritzgußform auf der gewünschten Temperatur gehalten, und zugleich wird ermöglicht, daß die mit Wärmeträger gefüllten Durchflußkanäle der Spritzgußform zur Abstützung während des Einspritzens des Materials genutzt werden.

Zweckmäßigerweise ist daher das Verfahren derart ausgelegt, daß der Angußbereich getrennt vom Kernbereich der Spritzgußform erwärmt bzw. gekühlt wird. Hierzu können gesonderte Wärmeträgerkreisläufe vorgesehen sein.

Vorzugsweise wird zur Kühlung oder Erwärmung der gleiche Wärmeträger, vorzugsweise ein flüssiger Wärmeträger, wie Öl, verwendet, wobei lediglich eine Umschaltung von einem extern liegenden Heizgerät auf ein ebenfalls extern liegendes Kühlgerät vorgenommen wird.

Um einen Wärmeverlust innerhalb der Spritzgußform weitgehend zu verringern und eine gezielte Erwärmung der den Formhohlraum begrenzenden Teile zu gewährleisten, sind die den Formhohlraum begrenzenden Teile gegenüber den Formaußenteilen wärmeisoliert.

Zur Wärmeisolierung können beispielsweise Luftspalte vorgesehen sein, die mantelförmig die den Formhohlraum begrenzenden Teile umgeben. Natürlich können auch Dämmstoffe zur Wärmeisolierung in diesen Bereichen vorgesehen werden.

Um zu erreichen, daß die Wärmeträgerkanäle in der Spritzgußform insbesondere im Bereich des Angusses vollständig von dem Wärmeträger durchströmt werden, sind der Einlaß und der Auslaß des äußeren Wärmeträgerkreislaufs einander etwa diametral gegenüberliegend in der Spritzgußform angeordnet.

Vorzugsweise werden bei der erfindungsgemäßen Spritzgußform die den Formhohlraum begrenzenden Teile als Formeinsätze ausgebildet, die zweckmäßigerweise geteilt sind. Hierbei ergibt sich der Vorteil, daß diese dünnwandigen Teile gesondert zu den anderen Formteilen maßgenau hergestellt werden können und daß im Falle eines Verschleißes nicht die gesamte Spritzgußform außer Gebrauch genommen werden muß, sondern es ausreicht, die Formeinsätze auszuwechseln, während der innere Formkern und die äußeren Teile der Spritzgußform weiter verwendet werden können.

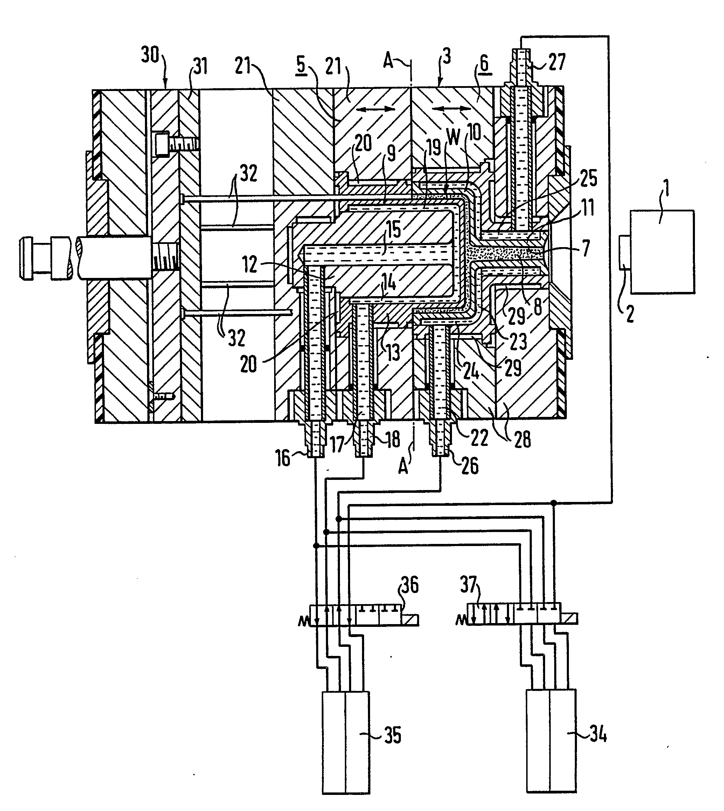

Die Erfindung wird nachstehend an einem Beispiel unter Bezugnahme auf die beigefügte Zeichnung näher erläutert.

Die einzige Figur der Zeichnung zeigt schematisch eine Spritzgußanlage mit einer Spritzgußform nach der Erfindung, mit welcher das Spritzgußverfahren nach der Erfindung verwirklicht wird.

Zuerst werden Einzelheiten der Spritzgußanlage, insbesondere der Spritzgußform und der dem Wärmeträger zugeordneten Einrichtungen erläutert.

In der Zeichnung ist schematisch mit 1 eine Spritzgußmaschine angedeutet. Die Spritzgußmaschine 1 hat einen Auslaß 2, über den das in der Spritzgußmaschine aufbereitete Kunststoffmaterial in eine Spritzgußform eingegeben wird, die insgesamt mit 3 bezeichnet ist.

Die Spritzgußform 3 ist längs einer Teilebene A-A geteilt und umfaßt ein in der Zeichnung links liegendes Spritzgußformteil 5 und ein in der Zeichnung rechts liegendes Spritzgußformteil 6. Bei der Durchführung des Spritzgußvorganges ist die Spritzgußform 3 insgesamt geschlossen und die beiden Spritzgußformteile 5, 6 werden aneinandergedrückt. Die Spritzgußform 3 enthält einen Formhohlraum 7, der beim dargestellten Beispiel mit eingespritztem Kunststoffmaterial 8 zur Verdeutlichung aus gefüllt ist. Der Formhohlraum 7 wird bei der Spritzgußform 3 von inneren und äußeren dünnwandigen Teilen, die mit 9 und 10 bezeichnet sind, begrenzt. An dem äußeren dünnwandigen Teil 10 ist eine Eingußbüchse 11 angeformt, die sich bis zum Eingußbereich der Spritzgußform 3 erstreckt. Der innere dünnwandige Teil 9 ist als ein vom Innenkern 12 der Spritzgußform 3 gesonderter Einsatz ausgebildet und fest mit dem Innenkern 12 verbunden. Dieser Einsatz bildet eine Außenschale 13 um den Innenkern 12 der Spritzgußform 3, wobei diese Anordnung zweckmäßigerweise dem linken Spritzgußformteil 5 zugeordnet ist. Die von dem Formhohlraum 7 abgewandt liegende innere Fläche des inneren dünnwandigen Teils 9 bildet unmittelbar eine der Wände eines mantelförmig um den Innenkern 12 verlaufenden Kanals 14 bzw. Durchflußkanals, der an einen Wärmeträgerkreislauf angeschlossen ist. Ferner umfaßt der Wärmeträgerkreislauf, d.h. der innere Wärmeträgerkreislauf (insgesamt mit 17 bezeichnet) einen Rücklaufkanal 15, der etwa durch den Mittel bereich des Innenkerns 12 geht und mit einem Auslaß 16 des inneren Wärmeträgerkreislaufes 17 verbunden ist. Mit 18 ist der Einlaß für den inneren Wärmeträgerkreislauf 17 bezeichnet. Dieser steht mit einem Ringkanal in Verbindung, der den Innenkern 12 umgibt und einen der Form des inneren dünnwandigen Teils 9 angepaßten Verlauf hat. Das innere dünnwandige Teil 9 ist gegenüber den äußeren insgesamt mit 21 bezeichneten Spritzgußformteilen durch Luftspalte 20 wärmeisolierend angeordnet.

Das äußere dünnwandige Teil 10 ist ebenfalls in Form eines Einsatzes ausgebildet und in der rechten Spritzgußformhälfte 6 angeordnet. Für das äußere dünnwandige Teil 10 ist ein gesonderter äußerer Wärmeträgerkreislauf vorgesehen, der insgesamt mit 22 bezeichnet ist. Die von dem Formhohlraum 7 abgewandt liegende Fläche des äußeren dünnwandigen Teils 10 bildet unmittelbar einen der Begrenzungswände der Durchflußkanäle 23 des äußeren Wärmeträgerkreislaufes 22. Der äußere Wärmeträgerkreislauf 22 umfaßt einen mantelförmig den durchmessergrößeren Bereich des Formhohlraums 7 umgebenden ersten Kanalabschnitt 24 und einen sich daran anschließenden durchmesserkleineren zweiten Kanalabschnitt 25, der mantelförmig den Bereich der integrierten Eingußbüchse 11 umgibt. Ein Einlaß 26 des äußeren Wärmeträgerkreislaufs 22 steht mit den ersten Kanalabschnitt 24 in Verbindung, während ein Auslaß 27 des äußeren Wärmeträgerkreislaufs 22 mit dem zweiten Kanalabschnitt 25 in Verbindung steht. Ferner liegen der Einlaß 26 und der Auslaß 27, bezogen auf die Spritzgußform 3, einander etwa diametral gegenüber. Hierdurch wird gewährleistet, daß beide Kanalabschnitte 24, 25 trotz ihrer unterschiedlich grossen Durchmesser gleichmäßig vom Wärmeträger durchströmt werden. Der äußere Wärmeträgerkreislauf 22 ist bei dem dargestellten Beispiel in der rechten Spritzgußformteilhälfte 6 der Spritzgußform 3 ausgebildet. Gegenüber den äußeren Spritzgußformteilen 28 der rechten Spritzgußformteilhälfte 6 ist der äußere dünnwandige Teil 10 der Spritzgußform 3 ebenfalls mit Hilfe von Luftspalten 29 beispielsweise wärmeisoliert angeordnet. Auch werden mit Hilfe von Luftspalten Wärmeübertragungswege zwischen der linken Spritzgußformteilhälfte 5 und der rechten Spritzgußformteilhälfte 6 vermieden.

Ferner ist in der Figur noch eine insgesamt mit 30 bezeichnete Auswerfereinrichtung gezeigt, die eine Auswerferplatte 31 umfaßt, die Auswerferstifte 32 trägt und die zum Auswurf des Spritzgußteils W nach seiner Fertigstellung in der Spritzgußform 3 bestimmt ist. Nach der Fertigstellung des Spritzgußteils W werden die Spritzgußformteilhälften 5, 6 im Bereich der Teilebene A-A, wie mit Pfeilen angedeutet, auseinandergefahren, wobei das hergestellte Spritzgußteil auf der linken Spritzgußformteilhälfte 5 an dem dort vorgesehenen inneren dünnwandigen Teil 9 haften bleibt. Bei dieser Verfahrbewegung der linken Spritzgußformteilhälfte 5 treten die Auswerferstifte 32 in entsprechende Kanäle der Spritzgußform 3 ein und drücken das Spritzgußteil W von dem inneren dünnwandigen Teil 9 der Spritzgußform 3 weg. Nach dieser Entnahme des Spritzgußteils W aus der Spritzgußform 3 werden dann die Spritzgußformteile 5, 6 wieder zusammengefahren und die Auswerfereinrichtung 30 wird in ihre Grundstellung zurückgefahren.

Ferner sind in der Figur der Zeichnung noch Kühlgeräte 34 und Heizgeräte 35 schematisch in Blockform dargestellt, die über entsprechende Steuerventile 36, 37 über schematisch als zurückgezogene Linien angedeutete Leitungen in vorbestimmter Weise gesteuert an den inneren Wärmeträgerkreislauf 17 und den äußeren Wärmeträgerkreislauf 22 angeschlossen werden.

Nachstehend wird die Verfahrensführung eines Spritzgußverfahrens in Verbindung mit den vorstehend näher erläuterten Einzelheiten einer Spritzgußanlage erläutert.

In der Spritzgußmaschine 1 wird das zu verarbeitende Kunststoffmaterial aufbereitet, bei dem es sich beispielsweise um einen hochempfindlichen Kunststoff, wie einem spritzbaren Fluorkunststoff (z.B. PFA, PVDF) handeln kann. Diese Kunststoffe haben Schmelztemperaturen, die in Bereichen von etwa 350 bis 400°C liegen. Selbstverständlich können auch andere Kunststoffe, insbesondere Kunststoffe mit kritischem Fließverhalten, in der Spritzgußmaschine 1 auf an sich übliche Weise aufbereitet werden. Während der Aufbereitung des Kunststoffmaterials in der Spritzgußmaschine 1 wird die Spritzgußform 3, insbesondere bezielt an den Bereichen des inneren dünnwandigen Teils 9 und des äußeren dünnwandigen Teils 10 über den inneren Wärmeträgerkreislauf 17 und den äußeren Wärmeträgerkreislauf 22 und die diesen zugeordneten Durchflußkanäle auf eine Temperatur aufgewärmt, die höher als dem Schmelzpunkt des Materials liegt. Hierbei werden der innere Wärmeträgerkreislauf 17 und der äußere Wärmeträgerkreislauf 22 an das Heizgerät 35 angeschlossen, das den Wärmeträger aufheizt. Vorzugsweise wird ein flüssiger Wärmeträger, wie z.B. Öl, verwendet. Der so das Heizgerät 35 verlassende aufgeheizte flüssige Wärmeträger läuft dann in dem inneren Wärmeträgerkreislauf 17 und dem äußeren Wärmeträgerkreislauf 22 um. Da gezielt die inneren und äußeren dünnwandigen Teile 9, 10 der Spritzgußform 3 erwärmt werden, kann diese Erwärmung auf eine über dem Schmelzpunkt des Materials liegende Temperatur energiesparend und innerhalb eines relativ kurzen Zeitraumes erreicht werden.

Wenn das Material in der Spritzgußmaschine 1 aufbereitet ist, wird der Spritzgußvorgang eingeleitet, bei dem das Material über den Auslaß 2 der Spritzgußmaschine 1 in den Formhohlraum 7 der Spritzgußform 3 eingespritzt wird. Zu Beginn dieses Einspritzvorganges wird der Durchfluß im inneren Wärmeträgerkreislauf 17 und im äußeren Wärmeträgerkreislauf 22 gesperrt, so daß die diesen Wärmeträgerkreisläufen zugeordneten Durchfluß spielsweise für die Endlagenkontrolle des Kolbens 3 in seiner ersten oder unteren Stellung integriert. Dieser Endschalter 30 arbeitet berührungslos und wird von einen sogenannten Näherungsinitiator gebildet. Gegen die Oberseite des hülsenförmigen Ansatzes 14 kommt der Kolben 3 in der unteren Endstellung zur Anlage. Ein Magnet 31, z.B. ein Permanentmagnet, ist am Kolben 3 angebracht.

Der Endschalter 30, der zweckmäßigerweise von einem Reed-Schalter gebildet wird, arbeitet mit diesem Magneten 31 zusammen und liefert entsprechend der Stellung des Kolbens 3 ein Signal. Um die axiale Verstellbarkeit der beiden Endstellungen des Kolbens 3 vollständig ausnutzen zu können, ist dieser Endschalter 30 ebenfalls im Gehäuse 2 des Kolbenantriebs 1 axial verstellbar vorgesehen. Hierzu enthält das Gehäuse 2 einen Längsschlitz 32 und der Endschalter 30 ist in der jeweils gewünschten axialen Lage mit Hilfe von Klemmeinrichtungen festlegbar.

Wie aus der Figur der Zeichnung zu erkennen ist, ist das Gehäuse in axialer Richtung gesehen etwa in der Mitte geteilt und umfaßt zwei Gehäusehälften 2a und 2b. Diese Gehäusehälften 2a und 2b sind im wesentlichen übereinstimmend ausgelegt und sie enthalten ebenfalls in weitgehend übereinstimmender Weise auch die Durchführungseinrichtungen 8, die beiden hülsenförmigen Einsätze 14 und 20 sowie die beiden Schneckenantriebs 15 und 21. In gestutzter Anordnung zueinander werden die beiden Gehäusehälften 2a, 2b miteinander unter Zwischenlage einer Dichtung 33 fest verbunden. Somit sind die im Kolbenantrieb 1 integrierten Einrichtungen insgesamt gesehen etwa spiegelsymmetrisch zu einer etwa senkrecht durch die Kolbenstange 5 gehenden Ebene im Gehäuse 2 angeordnet. Dank dieser Auslegung vereinfacht sich die Herstellung eines solchen Kolbenantriebs 1, da weitgehend übereinstimmend ausgebildete Teile zu dessen Herstellung und Montage verwendet Formhohlraum 7 lange Fließwege umfaßt und selbst wenn dünnwandige Spritzgußteile W hergestellt werden sollen, kann durch diese gesteuerte Abkühlung erreicht werden, daß man bei einer derartigen Verfahrensführung homogene und qualitativ hochwertige Spritzgußteile W erhält. Der Verfahrensablauf läßt sich jeweils individuell an das zu verarbeitende Kunststoffmaterial anpassen, wozu es lediglich weniger Probeläufe der Gesamtanlage bedarf. Aufgrund dieser Probeläufe der Gesamtanlage können dann die günstigsten Verfahrensbedingungen auch hinsichtlich des zeitlichen Ablaufs bestimmt werden. Aufgrund der vorgesehenen Luftspalte 20 und 29 zur Wärmeisolierung der inneren und äußeren dünnwandigen Teile 9 und 10 gegenüber den äußeren Spritzgußformteilen 21 und 28 läßt sich die gewünschte Temperaturführung beim Verfahren zuverlässig steuern und die Wärmeverluste lassen sich reduzieren, wobei man insbesondere innerhalb kurzer Zeit eine Aufwärmung der Spritzgußform 3 auf die nach der Erfindung angestrebte relativ hohe Temperatur erreichen kann, um die Taktzeiten des Spritzgußverfahren effektiv auf die Spritzgußmaschine 1 abstimmen zu können.

## Ansprüche

1. Spritzgußverfahren für Kunststoffe, bei dem die einen Formhohlraum begrenzende Spritzgußform mit einem durch die Spritzgußform strömenden Wärmeträger erwärmt oder gekühlt wird, dadurch gekennzeichnet, daß die Spritzgußform vor dem Einspritzen des Materials auf eine über dem Schmelzpunkt des Materials liegende Temperatur durch den Wärmeträger erwärmt wird, der Wärmeträgerdurchfluß durch die Spritzgußform während des Einspritzens des Materials gesperrt wird, und nach dem vollständigen Ausfüllen des Formhohlraums mit dem eingespritzten Material die Spritzgußform unter Durchfluß des Wärmeträgers auf eine unter dem Gefrierpunkt des Materials liegende Temperatur gekühlt wird.

2. Verfahren nach Anspruch 1, dadurch gekennzeichnet, daß bei der Abkühlung entfernt vom Anguß begonnen wird und dann die Abkühlung zeitlich gesteuert weitergeführt wird.

3. Verfahren nach Anspruch 1 oder 2, dadurch gekennzeichnet, daß der Angußbereich getrennt vom Kernbereich der Spritzgußform erwärmt bzw. gekühlt wird.

4. Spritzgußform zur Durchführung des Verfahrens nach einem der Ansprüche 1 - 3, mit einem Formkern, Durchflußkanälen für einen Wärmeträger zur Erwärmung oder Kühlung der Form und mit einem Formhohlraum, dadurch gekennzeichnet, daß die den Formhohlraum (7) begrenzenden Teile (9, 10) dünnwandig ausgelegt sind und daß die Durchflußkanäle (14, 19, 23) für den Wärmeträger und auf der vom Formhohlraum (7) abgewandten Seite der dünnwandigen Teile (9, 10) verlaufen.

5. Spritzgußform nach Anspruch 4, dadurch gekennzeichnet, daß die den Formhohlraum (7) begrenzenden Teile (9, 10) gegenüber den Formaußenteilen (21, 28) wärmeisoliert sind, insbesondere durch Luftspalte (20, 29) zwischen den den Formhohlraum (7) begrenzenden Teile (9, 10) und den Formaußenteilen (21, 28).

6. Spritzgußform nach Anspruch 4 oder 5, dadurch gekennzeichnet, daß an der Materialeintrittsseite der Spritzgußform 3 eine Angußbüchse angeordnet ist, die insbesondere einteilig an den den Formhohlraum (7) begrenzenden Teilen (9, 10) angeformt ist.

7. Spritzgußform nach einem der Ansprüche 4 - 6, dadurch gekennzeichnet, daß dem Innenbereich der Form (3) ein innerer Wärmeträgerkreislauf (17) und hiervon gesondert dem Außenbereich ein äußerer Wärmeträgerkreislauf (22) zugeordnet sind, daß die Durchflußkanäle (14, 15, 19) des inneren Wärmeträgerkreislaufs (17) im Innenkern (12) der Form (3) und die Durchflußkanäle (23, 24, 25) des äußeren Wärmeträgerkreislaufs (22) in den Außenteilen (21, 28) der Spritzgußform (3) angeordnet sind.

8. Spritzgußform nach einem der Ansprüche 4 - 7, dadurch gekennzeichnet, daß der innere Wärmeträgerkreislauf (17) einen etwa in der Mitte des Innenkerns(12)der Spritzgußform (3) verlaufenden Rücklaufkanal (15) umfaßt.

9. Spritzgußform nach einem der Ansprüche 4 - 8, dadurch gekennzeichnet, daß die Teile (9, 10) als geteilte Formeinsätze (9, 10) ausgebildet sind.

10. Spritzgußform nach einem der Ansprüche 4 - 9, dadurch gekennzeichnet, daß die Durchflußkanäle (14, 19, 23, 24, 25) für den Wärmeträger einen der Kontur des Formhohlraums (7) entsprechenden Verlauf haben, und daß die Innenwand bzw. die Außenwand der den Formhohlraum (7) begrenzenden Teile (9, 10) eine Wand der Durchflußkanäle (14,19, 23, 24, 25) bilden.